# EUROPÄISCHE PATENTSCHRIFT

(11) **EP 0 537 421 B1**
(45) Veröffentlichungstag und Bekanntmachung des Hinweises auf die Patenterteilung: **18.10.1995**
(21) Anmeldenummer: 92111898.0
(22) Anmeldetag: 13.07.1992
(51) Int. Cl.: B65G 47/38

(54) **Sortierförderanlage**
Sorting conveyor device
Installation de convoyeur de triage

(30) Priorität: 14.10.1991 DE 4133953
(43) Veröffentlichungstag der Anmeldung: 21.04.1993
(73) Patentinhaber: EISENMANN FÖRDERTECHNIK KG ( Komplementär: EISENMANN-Stiftung), 71002 Böblingen (DE)
(72) Erfinder: Riemrich, Eckhard, W-7413 Gomaringen (DE)
(74) Vertreter: Seemann, Norbert W., Dipl.-Ing.

(56) Entgegenhaltungen:
- FR-A- 1 228 547
- FR-A- 2 528 403
- US-A- 3 974 909

## Beschreibung

Die Erfindung bezieht sich auf eine Sortierförderanlage nach dem Wortlaut des Oberbegriffs des Patentanspruchs 1.

Derartige Förderanlagen sind in den verschiedensten Ausführungsvarianten bereits seit längerem bekannt und beispielsweise bei der Post zur Paket- und Päckchensortierung ebenso im Einsatz wie bei Großversandhäusern u.dgl.

Sämtliche bislang bekannten Systeme mit zwangsgesteuerter Kippung, wie u. a. beispielsweise aus der EP-A-0 173 399 bekannt, weisen aber den Nachteil auf, daß die dort in separaten Trommeln an den jeweiligen Kippwagen angeordneten Rollenführungen baulich bedingt nur äußerst kleine Hebelarme der Steuerglieder für die Rollenführungen zulassen und somit an den Führungselementen relativ große Kräfte und damit verbunden hoher Verschleiß auftritt; dies führt zwangsläufig bereits nach kurzer Zeit zu unruhigem Lauf der gesamten Anlage und instabilen Verhältnissen an den Kippwagen und zwar sowohl in der Grund- als auch in den Kippstellungen. Derartige Anlagen bekannter Bauart sind somit für die Auslegung auf Pakete höheren Gewichts, wie es neuerdings mit max. 31,5 kg beispielsweise bei der Post gefordert wird, überhaupt nicht geeignet. Als weiterer Nachteil bei der bekannten Ausführung nach der EP-PS 0 173 399 kommt noch hinzu, daß durch die baulich aufwendige Ausbildung und Anordnung der Steuerkurven und der Steuerelemente für die Kippung an den Kippwagen selbst, die Gesamtanlage sehr teuer wird, wenn man bedenkt, daß das Verhältnis von Kippwagen zu Kippstationen in der Regel etwa bei 10/1 liegt.

Die Aufgabe der vorliegenden Erfindung besteht deshalb auch darin, durch eine andere bauliche Ausgestaltung und Anordnung der gesamten Steuerelemente, die Anlagen der hier zur Rede stehenden Bauart wesentlich weniger anfällig gegen Verschleiß, auch bei höheren Paketgewichten, und insgesamt gesehen baulich dabei auch weniger aufwendig und damit betriebssicherer zu gestalten.

Gelöst wird diese Gesamtaufgabe nunmehr durch die im Patentanspruch 1 angegebenen baulichen Ausgestaltungsmerkmale und deren funktionell kombinatorisches Zusammenwirken. Die Unteransprüche beinhalten hierzu vorteilhafte Details bzw. Weiterbildungen des lösungsgemäßen Grundgedankens und der technischen Lehre des Hauptanspruchs, die zudem im folgenden anhand von zeichnerischen Darstellungen und deren Beschreibung an einem Ausführungsbeispiel noch näher erläutert sind.

Es zeigen:

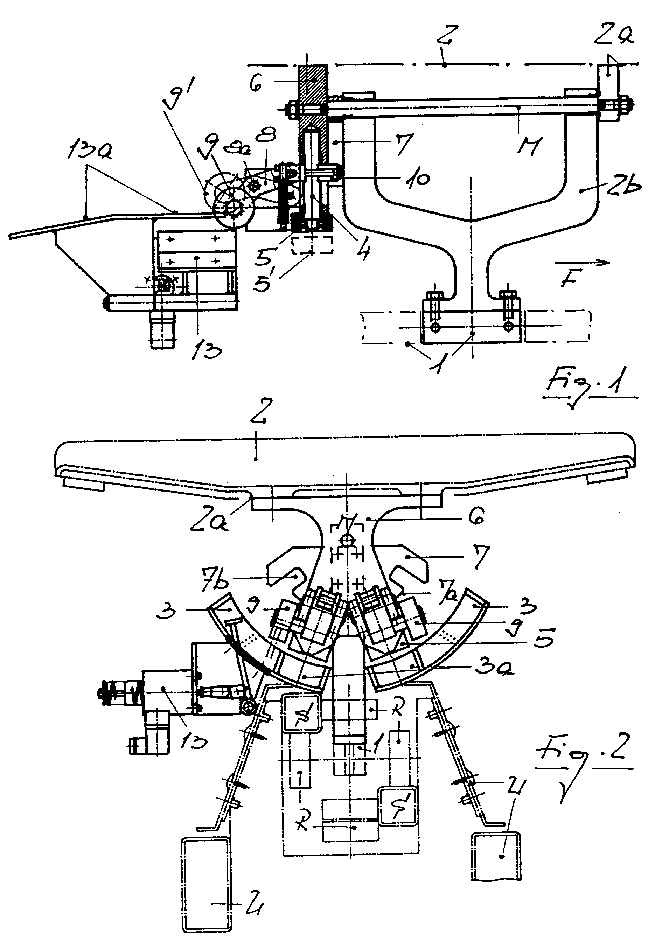

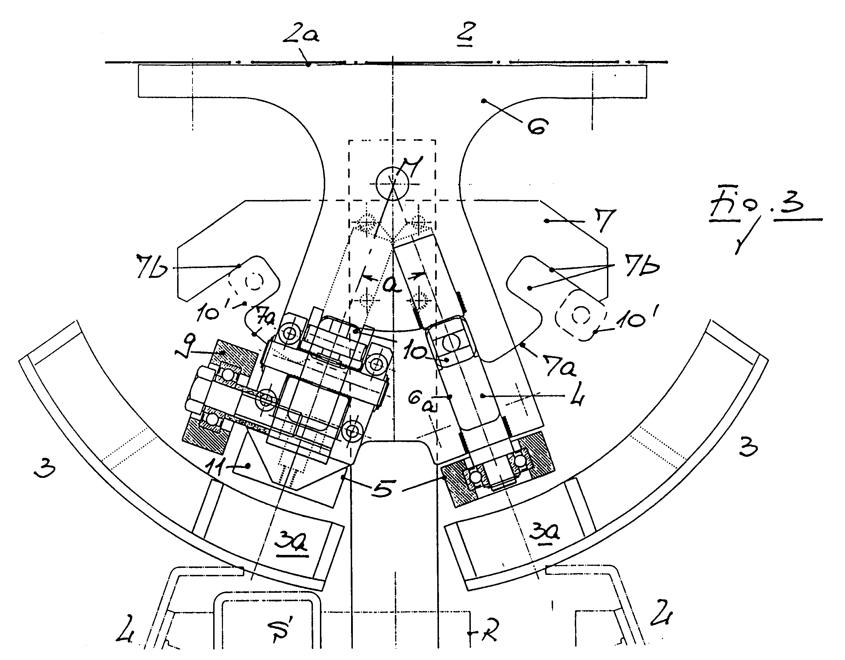

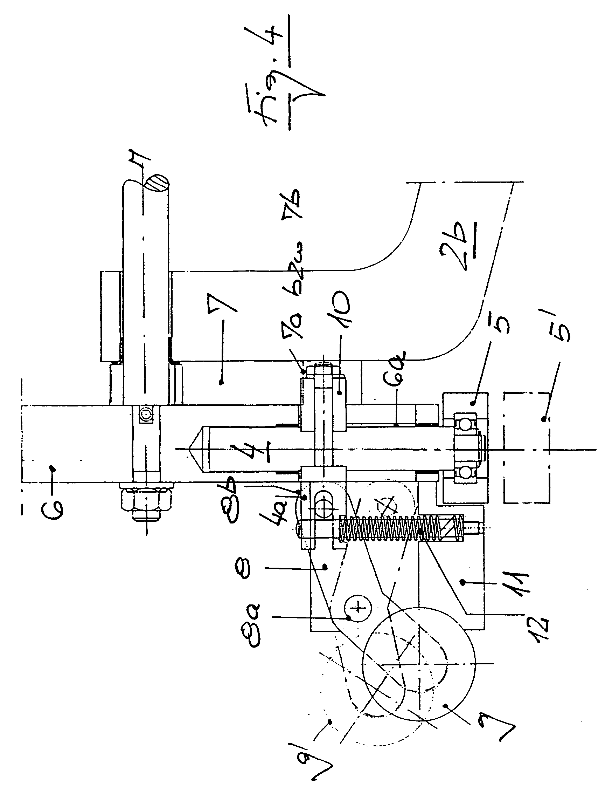

- Fig. 1: die Seitenansicht auf eine der neuen Kippwagen,
- Fig. 2: eine Stirnansicht zu Fig. 1 in Förderrichtung "F",
- Fig. 3: eine vergrößerte Darstellung der wesentlichen Bauteile aus Fig. 2 und
- Fig. 4: in ebenfalls in gleichem Maße vergrößerter Darstellung den Schwenkkopfbereich aus Fig. 1.

Die dargestellte Sortierförderanlage weist eine Vielzahl von in Förderrichtung "F" zumeist unmittelbar aufeinanderfolgenden und um eine in gleicher Richtung verlaufende Mittelachse "M" beidseits kippbaren Tafeln oder Schalen 2 auf, die mit ihrer Unterseite 2a auf den Traggliedern 2b sitzen, die ihrerseits wiederum auf einer endlosen, umlaufenden Kette 1 befestigt und bei denen eine zwangsgesteuerte Kippung und Wiederaufrichtung über entsprechende Steuerkurven 3 mit Führungsbahnen 3a, Weichen 13, 13a und Führungs- 5 bzw. Ausrück- bzw. Rückstellrollen 9 erzeugt wird.

Zur Lösung der mit der Erfindung gestellten Aufgabe sind bei einem solchen System nun vor allem folgende **drei** Merkmale von Wichtigkeit:
a) an der Unterseite 2a jeder der Kippschalen 2 ist vorzugsweise an der in Förderrichtung "F" hinteren Stirnseite ein mit in Richtung auf die jeweilige Steuerkurve 3, 3a der Kippstationen bzw. Weichen 13, 13a über Gleitbolzen 4 ausfahrbaren Führungsrollen 5 versehener, symmetrisch aufgebauter Schwenkkopf 6 fest angeordnet,
b) zu dem Schwenkkopf 6 benachbart sitzt unmittelbar am Tragglied 2b der Schalen 2 ein ebenfalls symmetrisch ausgebildetes, mit Gleitbahnen 7a und Rasten 7b versehenes Verriegelungsstück 7 und
c) die Gleitbolzen 4 der die Kippung durch beidseitige Zwangsführung in dem jeweiligen Führungskanal 3a der betreffenden Steuerkurve 3 bewirkenden Führungsrollen 5 stehen einerseits über einen zweiarmigen Schwenkhebel 8 mit dessen Ausrückrolle 9 in Verbindung und weisen anderseitig jeweils einen Gleitstein 10 auf, der beim Schwenken stets an den Gleitbahnen 7a des Verriegelungsstückes 7 anliegt und in jeder der Kippstellungen in die zugehörige Raste 7b formschlüssig einpaßt.

Gelangt nun also eine der Ausrückrollen 9 bei entsprechend gestellter Weiche 13 auf deren Auflaufbahn 13a, so wird über den zweiarmigen Hebel 8 der Gleitbolzen 4 samt Führungsrolle 5 nach unten in den Kanal 3a der dort angebrachten Steuerkurve 3 bewegt, wobei der ebenfalls am Gleitbolzen 4 sitzende Gleitstein 10 sich entlang einer der Bahnen 7a bis in seine Verriegelungs- bzw. Endstellung in der jeweiligen Raste 7b bewegt.

Aufgrund der bei dieser Ausführung im Vergleich zum Stand der Technik großen Hebelarme und Führungsrollen 5 treten hier an den Führungsgliedern nur geringe Kräfte und somit praktisch kein Verschleiß auf; somit zeichnet sich eine derart aufgebaute Anlage neben einer hohen Laufruhe noch dadurch aus, daß neben der Grundstellung auch in jeder Kipplage der Schalen 2 durch die eingerasteten bzw. beidseits fixierten Gleitsteine 10 stets formschlüssig stabile Verhältnisse an den bewegbaren Elementen vorhanden sind.

In weiterer baulicher Ausgestaltung ist bei diesem neuen Prinzip im einzelnen noch vorgesehen, daß die Gleitbolzen 4 jedes Schwenkkopfes 6 entsprechend dem gewünschten Kippwinkel "a" der Schalen 2 geneigt zur Vertikalen liegen, in Bohrungen 6a bzw. Kanälen des Schwenkkopfes 6 geführt und über eine Langloch- bzw. Schlitzverbindung 4a mit dem Anschlußteil 8a des zweiarmigen Schwenkhebels 8 verbunden sind, wobei der Drehpunkt 8a des Schwenkhebels 8 in einem separat am Schwenkkopf 6 angeordneten Lagerteil 11 sitzt und der Schwenkhebel 8 samt Gleitbolzen 4 durch eine Feder 12 in seiner Ausgangsstellung gehalten ist.

Diese Feder 12 ist dabei eine Druckfeder, wodurch auch bei einem eventuellen Federbruch stets gewährleistet ist, daß nach jedem beendeten Abkippvorgang die Ausrückrolle 9 über den Hebel 8 samt Gleitbolzen 4 wieder eingefahren wird. Es kann somit niemals zu Beschädigungen oder gar Abrissen dieser Bauteile durch falsch geschaltete Weichen 13, 13a kommen.

Weitere besondere Vorteile der zuvor beschriebenen neuen Ausgestaltung liegen noch in folgenden Einzelheiten:
- die neue Bauweise erlaubt ein zwangsgeführtes Abkippen aus der Horizontallage beidseits bis zu einem maximalen Kippwinkel von 35°,
- das Abkippverhalten ist durch entsprechende Gestaltung der Ausschleuskurven 3, 3a derart optimierbar, daß dabei beispielsweise kein Kippen der beförderten Pakete eintritt,
- einander gegenüberliegende Ausschleuskurven bzw. Kippstationen benötigen nur einen minimalen Versatz von 400 mm,
- sämtliche Kippwagen sind einfach in ihrem Aufbau und mit verschleißarmen Gleitlagerungen versehen und
- Reduzierung aller auftretenden Kräfte durch Wahl großer Hebelarme; dadurch geringer Verschleiß und stets hohe Laufruhe aller beweglichen Teile.

## Patentansprüche

1. Sortierförderanlage mit einer Vielzahl von in Förderrichtung ( F ) zumeist unmittelbar aufeinanderfolgenden und um eine in gleicher Richtung verlaufende Mittelachse beidseits kippbaren Tafeln oder Schalen ( 2 ), die über entsprechende Tragglieder ( 2b ) an einer endlosen, umlaufenden Kette ( 1 ) o.dgl. sitzen und bei denen eine zwangsgesteuerte Kippung und Wiederaufrichtung über entsprechende Steuerkurven ( 3 ), Führungsbahnen, Weichen, Rückstellrollen ( 9 ) u.ä. Elemente erzeugt wird,
**gekennzeichnet durch** das Zusammenwirken folgender baulicher Merkmale:
a) an der Unterseite ( 2a ) jeder der Kippschalen ( 2 ) ist vorzugsweise stirnseitig ein mit in Richtung auf die Steuerkurve ( 3, 3a ) der Kippstationen über Gleitbolzen ( 4 ) ausfahrbaren Führungsrollen ( 5 ) versehener, symmetrisch aufgebauter Schwenkkopf ( 6 ) fest angeordnet,
b) zu dem Schwenkkopf ( 6 ) benachbart sitzt unmittelbar am Tragglied ( 2b ) ein ebenfalls symmetrisch ausgebildetes, mit Gleitbahnen ( 7a ) und Rasten ( 7b ) versehenes Verriegelungsstück ( 7 ),
c) die Gleitbolzen ( 4 ) der die Kippung steuernden Führungsrollen ( 5 ) stehen einerseits über einen zweiarmigen Schwenkhebel ( 8 ) mit deren Ausrückrollen ( 9 ) in Verbindung und weisen anderseitig jeweils einen Gleitstein ( 10 ) auf, der an den Gleitbahnen ( 7a ) des Verriegelungsstückes ( 7 ) anliegt und in dessen Rasten ( 7b ) formschlüssig einpaßt.

2. Sortierförderanlage nach Anspruch 1,
**dadurch gekennzeichnet,**
daß die Gleitbolzen ( 4 ) jedes Schwenkkopfes ( 6 ) entsprechend dem gewünschten Kippwinkel ( a ) der Schalen ( 2 ) geneigt zur Vertikalen liegen, in Bohrungen ( 6a ) bzw. Kanälen des Schwenkkopfes ( 6 ) geführt und über eine Langloch- bzw. Schlitzverbindung ( 4a ) mit dem Anschlußteil ( 8a ) des zweiarmigen Schwenkhebels ( 8 ) verbunden sind.

3. Sortierförderanlage nach den Ansprüchen 1 und 2,
**dadurch gekennzeichnet,**
daß der Drehpunkt ( 8a ) des Schwenkhebels ( 8 ) in einem separat am Schwenkkopf ( 6 ) angeordneten Lagerteil ( 11 ) sitzt und der Schwenkhebel ( 8 ) samt Gleitbolzen ( 4 ) durch eine Feder ( 12 ) in seiner Ausgangsstellung gehalten ist.

## Claims

1. Sorting conveyor installation with a plurality of tables or pans which mostly directly follow one another in conveying direction (F), are tippable to both sides about a central axis extending in the same direction, are seated on an endless circulating chain (1) or the like by way of appropriate carrier elements (2b) and in which a constrainedly controlled tipping and realignment is produced by way of appropriate control cams (3), guide paths, deflectors, restoring rollers (9) and similar elements, characterised by the co-operation of the following constructional features:
a) a symmetrically constructed pivot head (6) is fixedly arranged at the underside (2a) of each of the tipper pans (2) preferably at the front side and is provided with guide rollers (5) drivable out by way of slide pins (4) in the direction of the control cams (3, 3a) of the tip stations,
b) a similarly symmetrically constructed latching member (7) provided with slide paths (7a) and notches (7b) is seated adjacent to the pivot head (6) and directly on the carrier element (2b),
c) the slide pins (4) of the guide rollers (5) controlling the tipping on the one hand stand in connection by way of a double-armed pivot lever (8) with throw-out rollers (9) thereof and on the other hand each have a respective slide block (10), which bears on the slide paths (7a) of the latching member (7) and fits in the notches (7b) thereof in shape-locking manner.

2. Sorting conveyor installation according to claim 1, characterised thereby that the slide pins (4) of each pivot head (6) lie inclined to the vertical in correspondence with the desired tip angle (a) of the pans (2), are guided in bores (6a) or channels of the pivot head (6) and are connected with the connecting part (8a) of the double-armed pivot lever (8) by way of an elongate hole connection or a slot connection (4a).

3. Sorting conveyor installation according to claims 1 and 2, characterised thereby that the fulcrum (8a) of the pivot lever (8) is seated in a bearing part (11) separately arranged at the pivot head (6) and the pivot lever (8) together with slide pins (4) is held in its initial setting by a spring (12).

## Revendications

1. Installation transporteuse à triage, comprenant une pluralité de plateaux ou de coquilles (2) qui se suivent le plus souvent d'une manière contiguë dans la direction du transport (F), qui peuvent basculer des deux côtés autour d'un axe central s'étendant dans la même direction, qui sont montées sur une chaîne sans fin tournante (1) ou similaire par l'intermédiaire d'organes porteurs correspondants (2b) et dans lesquelles un basculement et un redressement à commande forcée sont produits par l'intermédiaire de cames (3), de voies de guidage, d'aiguillages, de galets de rappel (9) et d'éléments similaires correspondants,
caractérisée par la coopération des caractéristiques constructives suivantes :
a) sur le côté inférieur (2a) de chacune des coquilles basculantes (2) est montée fixe, de préférence du côté frontal, une tête pivotante (6) qui est construite symétriquement et qui est pourvue de galets de guidage (5), ceux-ci pouvant être sortis par l'intermédiaire de goujons coulissants (4) dans la direction de la came de commande (3, 3a) des postes de basculement,
b) au voisinage de la tête pivotante (6) est montée directement sur l'organe porteur (2b) une pièce de verrouillage (7) qui est également conformée symétriquement et qui est pourvue de voies de glissement (7a) et d'encliquetages (7b),
c) les goujons coulissants (4) des galets de guidage (5) qui commandent le basculement sont reliés d'un côté à leurs galets de débrayage (9) par l'intermédiaire d'un levier pivotant à deux bras (8), et, de l'autre côté, ils comportent chacun un coulisseau (10) qui porte sur les voies de glissement (7a) de la pièce de verrouillage (7) et qui s'ajuste par conjugaison des formes dans les encliquetages (7b) de celle-ci.

2. Installation transporteuse à triage selon la revendication 1, caractérisée par le fait que les goujons coulissants (4) de chaque tête pivotante (6) sont inclinés par rapport à la verticale en fonction de l'angle de basculement (a) qui est souhaité pour les coquilles (2), qu'ils sont guidés dans des perçages (6a) ou, respectivement, des canaux de la tête pivotante (6), et qu'ils sont reliés à la pièce de raccordement (8a) du levier pivotant à deux bras (8) par l'intermédiaire d'une liaison (4a) par un trou allongé ou, respectivement, par une fente.

3. Installation transporteuse à triage selon les revendications 1 et 2, caractérisée par le fait que le centre de rotation (8a) du levier pivotant (8) est monté dans une pièce formant palier (11) qui est disposée séparément sur la tête pivotante (6), et que le levier pivotant (8) est maintenu dans sa position de départ avec le coulisseau (4) au moyen d'un ressort (12).
